# EUROPÄISCHE PATENTSCHRIFT

(11) **EP 3 071 845 B1**
(45) Veröffentlichungstag und Bekanntmachung des Hinweises auf die Patenterteilung: **16.05.2018**
(21) Anmeldenummer: 14789835.7
(22) Anmeldetag: 27.10.2014
(51) Int. Cl.: A47C 3/28, A47C 1/03, A47C 7/38, A47C 7/40, A47C 7/50, F16B 7/14

(54) **HUBSTELLER SOWIE SITZ- UND/ODER LIEGEMÖBEL MIT EINEM HUBSTELLER**
LIFT ADJUSTER AND SEATING AND/OR LOUNGING FURNITURE WITH A LIFT ADJUSTER
VÉRIN DE LEVAGE ET MEUBLE POUR S'ASSEOIR ET/OU S'ÉTENDRE POURVU D'UN VÉRIN DE LEVAGE

(30) Priorität: 18.11.2013 DE 102013019172
(43) Veröffentlichungstag der Anmeldung: 28.09.2016
(73) Patentinhaber: Ferdinand Lusch GmbH & Co. KG, 33649 Bielefeld (DE)
(72) Erfinder: SARTISOHN, Erich, 33719 Bielefeld (DE)
(74) Vertreter: Cohausz & Florack
(86) Internationale Anmeldenummer: PCT/EP2014/073015
(87) Internationale Veröffentlichungsnummer: WO 2015/071080

(56) Entgegenhaltungen:
- EP-A1- 1 080 665
- FR-E- 74 932

## Beschreibung

Die Erfindung betrifft einen Hubsteller zur Verstellung eines Sitzmöbels und/oder Liegemöbels, mit einem Gehäuse und einer Verstelllasche, wobei die Verstelllasche teilweise aus dem Gehäuse ausziehbar in dem Gehäuse gehalten ist. Ferner betrifft die Erfindung ein Sitzmöbel und/oder Liegemöbel mit zwei gegeneinander verstellbaren Bauteilen, vorzugsweise umfassend eine Rückenlehne, ein Kopfteil, ein Fußteil und/oder eine Armlehne, wobei die beiden Bauteile über einen Hubsteller verbunden sind.

Zur Verbesserung des Komforts für den Benutzer können viele Sitz- und Liegemöbel, wie Sessel, Sofas, Liegen und Betten durch den Benutzer verstellt werden. Die Verstellbarkeit betrifft beispielsweise Rückenlehnen, Kopfteile, Fußteile und/oder Armlehnen, die etwa in ihrer Neigung und/oder Höhe eingestellt werden können. Um eine entsprechende Einstellbarkeit bereitstellen zu können, haben sich sogenannte Hubsteller bewährt. Ein Hubsteller nach dem Oberbegriff des Anspruchs 1 ist aus der EP 1 080 665 A1 bekannt. Die Hubsteller umfassen ein Gehäuse und eine Verstelllasche, die teilweise aus dem Gehäuse ausgezogen werden kann. Die Verstelllasche trägt ein federbelastetes Rastelement, das infolge der Federkraft beim Ausziehen der Verstelllasche nacheinander in hierfür entlang des Gehäuses vorgesehene Aufnahmen einrastet. Die Aufnahmen und das Rastelement sind dabei so aufeinander abgestimmt, dass die Verstelllasche nach dem Verrasten in einer durch die Aufnahme vorgegebenen Stellung nicht wieder in das Gehäuse zurückgeschoben werden kann. Dies wird durch das formschlüssige Eingreifen des Rastelements in die entsprechende Aufnahme verhindert. Ein weiteres Ausziehen der Verstelllasche kann jedoch aus derselben Stellung problemlos erfolgen. Um die Verstelllasche wieder in die Ausgangsstellung bringen zu können, muss die Verstelllasche zunächst bis zu einer Endstellung aus dem Gehäuse herausgezogen werden. Dabei wird das Rastelement blockiert, so dass dieses beim Zurückschieben der Verstelllasche in das Gehäuse nicht in die dort vorgesehenen Aufnahmen eingreifen kann. Beim erneuten Ausziehen der Verstelllasche aus dem Gehäuse wird das Rastelement jedoch wieder aktiviert und rastet demzufolge erneut nacheinander in die entlang des Gehäuses vorgesehenen Aufnahmen ein.

Die Verstelllasche bekannter Hubsteller wird typischerweise mit dem zu verstellenden Bauteil etwa in Form einer Rückenlehne, Kopfstütze, Fußstütze oder Armlehne verbunden, während das Gehäuse des Hubstellers an einem Bauteil festgelegt wird, gegenüber dem das zu verstellende Bauteil verstellt werden soll. Es kann sich dabei insbesondere um ein tragendes Element des Möbels wie etwa um einen Rahmen des Möbels oder einen Sitzrahmen desselben handeln. Wird das zu verstellende Bauteil verstellt, d.h. beispielsweise ausgezogen oder verschwenkt, wird die Verstelllasche teilweise aus dem Gehäuse herausgezogen und verharrt in einer Stellung in der das Rastelement der Verstelllasche formschlüssig in eine Aufnahme des Gehäuses eingreift. In dieser Stellung kann das zu verstellende Bauteil durch den Benutzer belastet werden, ohne dass es zu einem versehentlichen Zurückverstellen kommt. Ein weiteres Verstellen in Auszugsrichtung der Verstelllasche ist dabei jedoch möglich, wonach das Rastelement in eine andere Aufnahme eingreift. Um das zu verstellende Bauteil in seine Ausgangsstellung zurück zu bewegen, muss das zu verstellende Bauteil zunächst weiter verstellt werden, bis die Verstelllasche in eine Endstellung gelangt. Aus dieser Endstellung kann die Verstelllasche wieder ganz in das Gehäuse eingeschoben werden, und zwar durch ein Zurückverstellen des verstellbaren Bauteils in dessen Ausgangsposition. Ausgehend von dieser Stellung ist ein erneutes Verstellen, etwa Verschwenken oder Ausziehen, des zu verstellenden Bauteils möglich.

Nachteilig an den bekannten Hubstellern ist jedoch, dass die Verstelllasche nur in wenigen Stellungen arretiert werden kann. Von der letzten Arretierstellung muss die Verstelllasche zudem recht weit ausgezogen werden, um das Rastelement für das Zurückschieben der Verstelllasche zu blockieren. Auch muss die Verstelllasche von der maximal eingeschobenen Stellung recht weit ausgezogen werden, bis das Rastelement wieder aktiv ist und in die erste Aufnahme einrasten kann. Die entsprechenden Verstellwege zwischen den Endstellungen und der ersten bzw. der letzten Aufnahme werden auch Auslösewege genannt und sollten zur einfachen Bedienbarkeit kurz sein.

Der vorliegenden Erfindung liegt folglich die Aufgabe zugrunde, die Hubsteller, Sitzmöbel und/oder Liegemöbel jeweils der eingangs genannten Art derart auszugestalten und weiterzubilden, dass ein komfortableres Verstellen erfolgen kann. Diese Aufgabe ist bei einem Hubsteller nach dem Oberbegriff des Anspruchs 1 dadurch gelöst, dass das Gehäuse einen Endanschlag für das Klemmelement und/ oder den Klemmschlitten derart aufweist, dass die separate Verbindung zwischen der Verstelllasche und dem wenigstens einen Klemmelement und/oder dem Klemmschlitten beim Ausziehen der Verstelllasche in die Endstellung zwangsweise geschlossen wird. Die zuvor genannte Aufgabe ist zudem bei einem Sitz- und/oder Liegemöbel nach dem Oberbegriff des Anspruchs 13 dadurch gelöst, dass der Hubsteller nach einem der Ansprüche 1 bis 12 ausgebildet ist.

Die Erfindung hat demnach erkannt, dass vorteilhafterweise auf das schrittweise Verrasten von Verstelllasche und Gehäuse zugunsten einer klemmenden Verbindung verzichtet werden kann. Um die Verstelllasche aus dem Gehäuse ausziehen, ein versehentliches Zurückschieben der Verstelllasche in das Gehäuse jedoch unterbinden zu können, ist das wenigstens eine Klemmelement gegenüber der Verstelllasche verschiebbar vorgesehen, und zwar von einer Verstellstellung in eine Klemmstellung und zurück. Auf diese Weise kann das wenigstens eine Klemmelement in einen Klemmspalt zwischen dem Verstellhebel und dem Gehäuse gelangen, und zwar derart, dass das Klemmelement in einer Klemmstellung klemmend zwischen der Verstelllasche und dem Gehäuse angeordnet ist. Dieser klemmende Eingriff des Klemmelements in den Klemmspalt verhindert das Zurückschieben der Verstelllasche in das Gehäuse hinein, etwa durch Ausbildung eines Formschlusses zwischen der Verstelllasche und dem Klemmelement.

Die Verstelllasche kann aus dieser Klemmstellung jedoch weiter ausgezogen werden, wobei das Klemmelement gegenüber der Verstelllasche in die Verstellstellung verschoben wird. In dieser Stellung behindert das Klemmelement das weitere Ausziehen der Verstelllasche nicht.

Das Klemmelement kann grundsätzlich unterschiedliche Formen aufweisen. Die Form des Klemmelements sollte dabei vorzugsweise so gewählt werden, dass eine zuverlässige Klemmung erreicht wird und hohe Klemmkräfte übertragen werden können. Das Klemmelement sollte aber auch so ausgebildet sein, dass die Klemmung des Klemmelements im Klemmspalt leicht wieder aufgehoben werden kann, wenn die Verstelllasche weiter ausgezogen wird. Besonders bevorzugt sind dabei kugelförmige oder zylinderförmige Klemmelemente. Zudem sollte der Klemmspalt an das verwendete Klemmelement angepasst sein, um so eine leichte Klemmung sowie eine leichte Überwindung der Klemmung bei weiterem Ausziehen der Verstelllasche zu gewährleisten. Damit hohe Klemmkräfte aufgenommen werden können, bietet es sich grundsätzlich an, wenn die Verstelllasche, das Gehäuse und/oder das Klemmelement aus einem metallischen Werkstoff gefertigt sind.

Des Weiteren kann es grundsätzlich ausreichend sein, ein Klemmelement vorzusehen. Um den Komfort beim Bedienen des Hubstellers zu verbessern und zudem bedarfsweise die Gleichmäßigkeit der Kraftübertragung zu erhöhen, können auch mehrere Klemmelemente vorgesehen sein. Die Klemmelemente können in einem gemeinsamen Klemmspalt vorgesehen sein und in der Klemmstellung darin klemmend gehalten sein. Besonders bevorzugt wird es jedoch sein, wenn mehrere Klemmspalte vorgesehen sind und in jedem Klemmspalt wenigstens ein Klemmelement, insbesondere genau ein Klemmelement, vorgesehen ist. Um gleichzeitig den Fertigungsaufwand und die Fertigungskosten gering zu halten, ist es besonders bevorzugt, wenn zwei Klemmelemente vorgesehen sind. Alternativ oder zusätzlich ist es aus dem gleichen Grund bevorzugt, wenn zwei Klemmspalte vorgesehen sind. Diese Klemmspalten können bevorzugt zwischen einander gegenüberliegenden Flächen des Verstellhebels und ebenfalls einander gegenüberliegenden Innenseiten des Gehäuses gebildet werden, um eine gleichmäßige Kraftableitung sicherzustellen.

Da bei dem erfindungsgemäßen Hubsteller ein versehentliches Zurückschieben der Verstelllasche in das Gehäuse durch die Klemmung des wenigstens einen Klemmelements im Klemmspalt verhindert wird, lässt sich der Hubsteller sehr geräuscharm betätigen. Ein hörbares Einrasten eines Rastelements der Verstelllasche in eine korrespondierende Aufnahme des Gehäuses, wie dies im Stand der Technik der Fall ist, tritt nicht mehr auf. Dadurch wird der Komfort für den Benutzer weiter verbessert.

Bei einer ersten bevorzugten Ausgestaltung des Hubstellers verjüngt sich der wenigstens eine Klemmspalt in Auszugsrichtung der Verstelllasche. Auf diese Weise kann durch ein Verschieben des Klemmelements in den Klemmspalt hinein eine Klemmung erreicht und durch ein Verschieben des Klemmelements in die Gegenrichtung die Klemmung wieder aufgehoben werden. Das wenigstens eine Klemmelement ist dabei vorzugsweise in beiden Stellungen im Klemmspalt aufgenommen. So kann ein versehentliches Blockieren des Klemmelements bei Einführen in den Klemmspalt vermieden werden. Der Klemmspalt kann der Einfachheit halber keilförmig ausgebildet sein und ebene Flächen umfassen, die in einem spitzen Winkel zueinander verlaufen. Unabhängig davon bietet es sich aus konstruktiver Sicht an, wenn von den beiden einander gegenüberliegenden Flächen des Klemmspalts eine Fläche vom Gehäuse und eine Fläche von der Verstelllasche gebildet wird.

Die Bereitstellung des wenigstens einen Klemmspalts ist in einfacher Weise möglich, wenn die Verstelllasche ein sich wenigstens zu einer Seite verjüngendes im Gehäuse aufgenommenes Ende aufweist. Dadurch kann wenigstens ein Klemmspalt bereitgestellt werden. Wenn sich das Ende der Verstelllasche an mehreren, vorzugsweise an zwei gegenüberliegenden, Seiten verjüngt, können auch mehrere, vorzugsweise zwei, Klemmspalten gebildet werden. Die erforderliche Klemmung wird dann einfach erreicht, wenn das wenigstens eine Klemmelement in der Klemmstellung zwischen wenigstens einer Seite des sich verjüngenden Endes der Verstelllasche und einer Innenseite des Gehäuses geklemmt ist.

Um die Klemmelemente einfacher und genauer relativ zur Verstelllasche und/oder zum entsprechenden wenigstens einen Klemmspalt führen zu können, bietet es sich an, wenn ein das wenigstens eine Klemmelement haltender Klemmschlitten vorgesehen ist. Dabei ist der Klemmschlitten vorzugsweise verschiebbar gegenüber der Verstelllasche vorgesehen, und zwar von einer Klemmstellung in eine Verstellstellung und zurück, um die Funktion der Klemmelemente zu gewährleisten. Aus konstruktiver Sicht ist es zudem bevorzugt, wenn der Klemmschlitten an der Verstelllasche selbst, wenn auch verschieblich, gehalten und bedarfsweise im Gehäuse aufgenommen ist. Grundsätzlich können auch mehrere Klemmschlitten vorgesehen sein, die jeweils wenigstens ein Klemmelement aufweisen und dieses gegenüber der Verstelllasche verschiebbar führen. Um die Anzahl der für die Herstellung des Hubstellers benötigten Bauteile zu begrenzen, ist es jedoch grundsätzlich bevorzugt, wenn lediglich ein Klemmschlitten vorgesehen ist. Dabei kann das Klemmelement einstückig mit dem Klemmschlitten ausgebildet sein und folglich von diesem gebildet werden. Bevorzugt ist jedoch eine zweiteilige Ausführung. Da der Klemmschlitten im Vergleich mit dem Klemmelement geringere Kräfte aufnehmen muss, ist der Klemmschlitten aus Kostengründen vorzugsweise im Wesentlichen aus Kunststoff gebildet.

Um das wenigstens eine Klemmelement und/oder den Klemmschlitten verschiebbar zur Verstelllasche vorzusehen und gleichzeitig eine unverlierbare Verbindung bereitzustellen, kann die Verstelllasche ein Langloch aufweisen, wobei das wenigstens eine Klemmelement und/oder der Klemmschlitten formschlüssig und verschiebbar in das Langloch eingreift.

Damit der Hubsteller stets sicher gegen ein versehentliches Zusammenschieben gesichert ist, muss das wenigstens eine Klemmelement nicht bloß verschiebbar gegenüber der Verstelllasche gehalten sein. Das wenigstens eine Klemmelement muss auch mit der Verstelllasche entlang des Gehäuses bewegt werden können, wenn die Verstelllasche um einen größeren Längenbetrag weiter ausgezogen wird. Es kann daher zwischen dem wenigstens einen Klemmelement und/oder dem Klemmschlitten vorzugsweise ein Formschluss gebildet werden, um das wenigstens eine Klemmelement und/oder den Klemmschlitten mit der Verstelllasche über eine größere Distanz ausziehen zu können. Ein geringfügiges Ausziehen der Verstelllasche ohne eine entsprechende Mitnahme des wenigstens einen Klemmelements und/oder des Klemmschlittens ist aber vorzugsweise dennoch möglich, um das wenigstens eine Klemmelement unter Aufhebung der Klemmung geringfügig gegenüber dem Klemmspalt zu verschieben.

Um die Verstelllasche nach erfolgtem Ausziehen aus dem Gehäuse wieder in das Gehäuse einschieben zu können, ist ein Klemmelement und/oder ein Klemmschlitten in einer Position an der Verstelllasche festzulegen, in der das wenigstens eine Klemmelement nicht in klemmendem Eingriff mit dem Klemmspalt ist. Dazu ist eine separate lösbare Verbindung zwischen der Verstelllasche und dem wenigstens einen Klemmelement und/oder dem Klemmschlitten vorgesehen. Die Verstelllasche ist dann im über die separate Verbindung mit dem wenigstens einen Klemmelement und/oder dem Klemmschlitten verbundenen Zustand von einer Endstellung bis wenigstens etwa in eine Ausgangsstellung in das Gehäuse einschiebbar. Die entsprechende Verbindung wird als separat bezeichnet, weil das wenigstens eine Klemmelement und/oder der Klemmschlitten noch über eine andere Verbindung verschiebbar an der Verstelllasche gehalten ist.

Da die separate Verbindung eine lösbare Verbindung sein sollte, die lediglich beim Zurückschieben der Verstelllasche etwa von einer ausgezogenen Endstellung in eine eingeschobene Ausgangsstellung geschlossen wird, kommt als separate Verbindung der Einfachheit halber eine Klemmverbindung und/oder Rastverbindung in Frage.

Damit die separate Verbindung zwischen der Verstelllasche und dem wenigstens einen Klemmelement und/oder dem Klemmschlitten beim Ausziehen der Verstelllasche in die Endstellung zwangsweise geschlossen wird, weist das Gehäuse einen Endanschlag für das Klemmelement und/oder den Klemmschlitten auf.

Das weitere Verschieben des wenigstens einen Klemmelements und/oder des Klemmschlittens wird dadurch behindert, während die Verstelllasche bedarfsweise noch weiter in Auszugsrichtung verschiebbar ist. Die dadurch erzwungene Relativbewegung zwischen dem wenigstens einen Klemmelement und/oder dem Klemmschlitten einerseits und der Verstelllasche andererseits kann dann dazu genutzt werden, die separate Verbindung zwangsweise und ohne weiteres Zutun des Benutzers zu schließen. Durch den Endanschlag wird also vorzugsweise das wenigstens eine Klemmelement und/oder der Klemmschlitten in Auszugsrichtung der Verstelllasche festgelegt, während die Verstelllasche noch etwas weiter ausgezogen werden kann. Ein bedarfsweise vorgesehener Endanschlag zwischen dem Gehäuse und der Verstelllasche wird dann erst aktiv, wenn die Verstelllasche noch etwas weiter ausgezogen worden ist. Der Endanschlag zwischen dem Gehäuse und der Verstelllasche sorgt dafür, dass die Verstelllasche nicht vollständig aus dem Gehäuse gezogen werden kann, um zu vermeiden, dass das Gehäuse und die Verstelllasche außer Eingriff gelangen. Der Verstellweg der Verstelllasche vom Erreichen des Endanschlags für das wenigstens eine Klemmelement und/oder den Klemmschlitten bis zum Endanschlag der Verstelllasche kann sehr kurz gewählt werden (Auslöseweg), was die Bedienung des Hubstellers durch den Benutzer komfortabel macht.
Damit die separate Verbindung zwischen der Verstelllasche und dem Klemmelement und/oder dem Klemmschlitten beim Einschieben der Verstelllasche in die Ausgangsstellung zwangsweise gelöst werden kann, kann das Gehäuse alternativ oder zusätzlich einen Ausgangsanschlag für das Klemmelement und/oder den Klemmschlitten bereitstellen. Wenn die Verstelllasche, nachdem das wenigstens eine Klemmelement und/oder der Klemmschlitten am Ausgangsanschlag anliegt, noch etwas weiter in Richtung der Ausgangsstellung im Sinne einer weiteren Endstellung in das Gehäuse eingeschoben wird, kann die so erzwungene Relativbewegung zwischen dem wenigstens einen Klemmelement und/oder dem Klemmschlitten einerseits und der Verstelllasche andererseits dazu genutzt werden, die separate Verbindung zwischen dem wenigstens einen Klemmelement und/oder dem Klemmschlitten und der Verstelllasche wieder zu lösen. Der Ausgangsanschlag begrenzt die Bewegung des wenigstens einen Klemmelements und/oder des Klemmschlittens in das Gehäuse hinein, während die Verstelllasche noch etwas weiter in das Gehäuse eingeschoben werden kann. Erst danach ist bedarfsweise ein Ausgangsanschlag zwischen der Verstelllasche und dem Gehäuse vorgesehen, der das maximale Einschieben der Verstelllasche in das Gehäuse begrenzt. Das maximale Einschieben könnte alternativ auch durch ein Verklemmen des nun wieder gegenüber der Verstelllasche verschiebbar gehaltenen wenigstens einen Klemmelements im wenigstens einen Klemmspalt im Sinne eines Ausgangsanschlags der Verstelllasche begrenzt sein. Der Verstellweg der Verstelllasche vom Erreichen des Ausgangsanschlags des wenigstens einen Klemmelements und/oder des Klemmschlittens bis zum Ausgangsanschlag der Verstelllasche kann sehr kurz gewählt werden (Auslöseweg), was die Bedienung des Hubstellers durch den Benutzer komfortabel macht.

Die separate Verbindung zwischen der Verstelllasche und dem wenigstens einen Klemmelement und/oder dem Klemmschlitten kann konstruktiv einfach und zuverlässig bereitgestellt werden, wenn die Verstelllasche wenigstens einen Zapfen oder dergleichen aufweist. Das wenigstens eine Klemmelement und/oder der Klemmschlitten kann dann alternativ oder zusätzlich wenigstens ein Verbindungselement aufweisen, das bei geschlossener separater Verbindung den Zapfen oder das vergleichbare Verbindungselement klemmt und/oder hintergreift. Der wenigstens eine Zapfen der Verstelllasche kann dann in einer Aussparung des wenigstens einen Klemmelements und/oder Klemmschlittens aufgenommen sein. Es kann natürlich alternativ auch an dem wenigstens einen Klemmelement und/oder dem Klemmschlitten wenigstens ein Zapfen vorgesehen sein, der mit wenigstens einem Verbindungselement der Verstelllasche zusammenwirken und so verbunden werden kann. Die entsprechende Verbindung bildet in jedem Fall vorzugsweise einen Kraft- und/oder Formschluss. Wenigstens im Falle eines Formschlusses bietet sich insbesondere eine Rastverbindung an.

Grundsätzlich können unabhängig von einem Endanschlag zwischen dem Gehäuse und dem wenigstens einen Klemmelement und/oder dem Klemmschlitten auch das Gehäuse und die Verstelllasche korrespondierende Anschlagflächen aufweisen. Diese korrespondierenden Anschlagflächen können einen Endanschlag bilden, um in einer Endstellung der Verstelllasche Auszugskräfte sicher auf das Gehäuse abzuleiten, wenn die Anschlagflächen aneinander anliegen. Zudem wird so vermieden, dass die Verstelllasche soweit aus dem Gehäuse ausgezogen wird, dass die Verstelllasche außer Eingriff mit dem Gehäuse gelangt.

Um in konstruktiv einfacher Weise eine relative Verschiebung zwischen der Verstelllasche einerseits und dem wenigstens einen Klemmelement und/oder dem Klemmschlitten andererseits zwischen der Klemmstellung und der Verstellstellung zu gewährleisten, kann das wenigstens eine Klemmelement und/oder der Klemmschlitten wenigstens abschnittsweise reibschlüssig am Gehäuse anliegen. So kann beispielsweise erreicht werden, dass das wenigstens eine Klemmelement und/oder der Klemmschlitten zunächst relativ zum Gehäuse eine Position beibehält, wenn die Verstelllasche ausgehend von einer Klemmstellung weiter aus dem Gehäuse ausgezogen wird. Die entsprechende Relativbewegung zwischen dem wenigstens einen Klemmelement und/oder dem Klemmschlitten einerseits und der Verstelllasche andererseits bewirkt, dass das Klemmelement nicht mehr klemmend im Klemmspalt gehalten ist. Sodann kann eine etwa formschlüssige Verbindung zwischen der Verstelllasche und dem wenigstens einen Klemmelement und/oder dem Klemmschlitten bewirken, dass das wenigstens eine Klemmelement und/oder der Klemmschlitten bei weiterer Verstellung der Verstelllasche mit dieser entlang des Gehäuses verschoben wird. Die Verstelllasche kann dann in einer anderen Position erneut nur um einen sehr geringen Längenbetrag in das Gehäuse eingeschoben werden, bevor das Klemmelement erneut in eine Klemmstellung im Klemmspalt gelangt und das weitere Einschieben der Verstelllasche in das Gehäuse unterbindet. Bedarfsweise kann das wenigstens eine Klemmelement und/oder der Klemmschlitten während des Verstellens der Verstelllasche durchgängig in Anlage an dem Gehäuse sein. Dann wird während des Verstellens des wenigstens einen Klemmelements und/oder des Klemmschlittens die entsprechende Haftreibung überwunden, und zwar etwa infolge der formschlüssigen Verbindung zwischen der Verstelllasche und dem wenigstens einen Klemmelement und/oder dem Klemmschlitten.

Bei einer besonders bevorzugten Ausgestaltung des Hubstellers ist vorgesehen, dass die Verstelllasche bereichsweise, wenigstens im Wesentlichen, stufenlos entlang des Gehäuses verstellbar ist. Die Verstelllasche kann also über weite Teile des Verstellwegs durch entsprechende Klemmkräfte im Gehäuse gegen ein Einschieben in das Gehäuse gesichert werden. Die Klemmung kann nämlich anders als bei den bekannten Hubstellern nicht nur im Bereich bestimmter Aufnahmen bereitgestellt werden, sondern vorzugsweise bereichsweise an jeder Stelle des Gehäuses.

Die Erfindung wird nachfolgend anhand von einer lediglich Ausführungsbeispiele darstellenden Zeichnung näher erläutert. In der Zeichnung zeigt
- Fig. 1: einen ersten erfindungsgemäßen Hubsteller in einer perspektivischen Ansicht,
- Fig. 2A-B: den Hubsteller aus Fig. 1 in einer teilweise ausgezogenen Stellung in einer Schnittansicht entlang den Schnitten IIA-IIA und IIB-IIB,
- Fig. 3: den Hubsteller aus Fig. 1 in einer fast vollständig ausgezogenen Stellung in einem Längsschnitt,
- Fig. 4: den Hubsteller aus Fig. 1 in einer ausgezogenen Endstellung in einem Längsschnitt,
- Fig. 5: einen zweiten erfindungsgemäßen Hubsteller in einer Draufsicht,
- Fig. 6: den Hubsteller aus Fig. 5 in einer fast vollständig eingeschobenen Stellung in einem Längsschnitt und

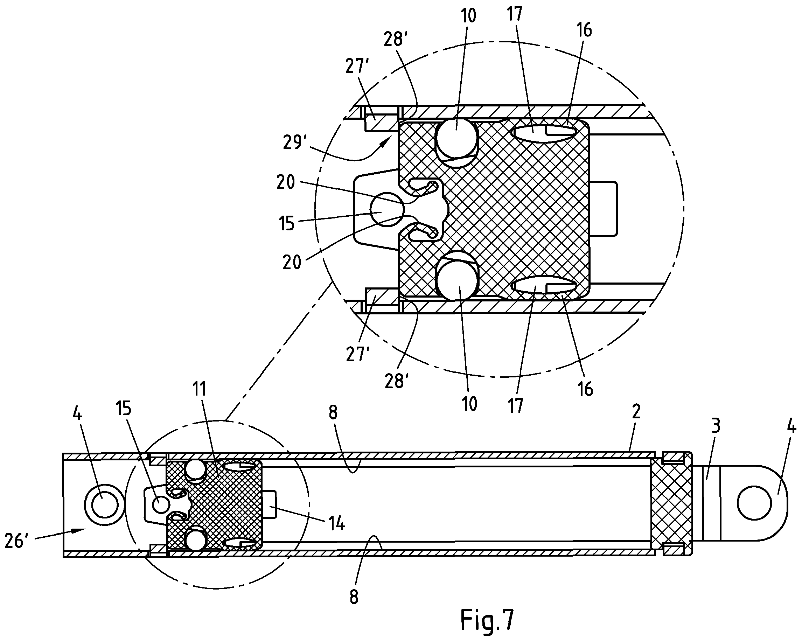

- Fig. 7: den Hubsteller aus Fig. 5 in einer eingeschobenen Ausgangsstellung in einem Längsschnitt.

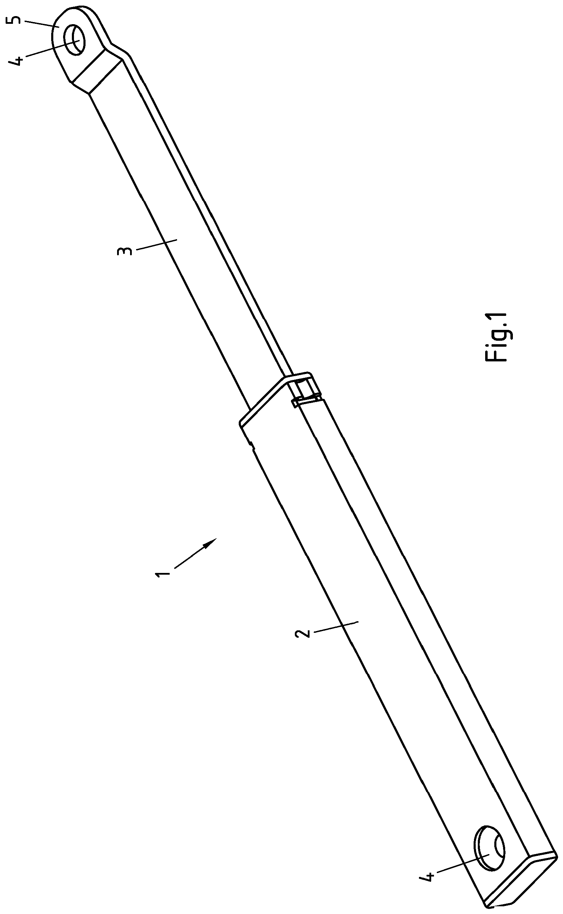

In der Fig. 1 ist ein Hubsteller 1 in einer perspektivischen Ansicht dargestellt. Der Hubsteller 1 umfasst ein Gehäuse 2 und eine teilweise aus dem Gehäuse 2 ausgezogene Verstelllasche 3. Am hinteren Ende des Gehäuses 2 und am vorderen Ende der Verstelllasche 3 ist jeweils eine durchgehende Öffnung 4 vorgesehen. Mit Hilfe der Öffnungen 4 kann der Hubsteller 1 an unterschiedlichen Bauteilen eines Sitzmöbels und/oder eines Liegemöbels montiert werden. Die Verstelllasche 3 wird dabei vorzugsweise an einem verstellbaren Bauteil montiert, während das Gehäuse 2 vorzugsweise an einem nicht verstellbaren Bauteil oder einem unabhängig verstellbaren Bauteil des Möbels montiert ist. Im Falle eines Sofas kann beispielsweise die Verstelllasche 3 an einer verschwenkbaren Armlehne montiert sein, während das Gehäuse 2 an einem Rahmenelement des Sofas oder dem Sitzrahmen befestigt ist. Im Falle eines Betts kann das Kopfteil mit der Verstelllasche 3 verbunden sein, während das Gehäuse 2 an einem Bettrahmen oder Bettgestell festgelegt ist.

Die Verstelllasche 3 weist beim dargestellten und insoweit bevorzugten Hubsteller 1 ein gekröpftes äußeres Ende 5 auf, an dem die Öffnung 4 vorgesehen ist. Der übrige Teil der Verstelllasche 3 ist im Wesentlichen streifenförmig ausgebildet, könnte aber auch beispielsweise stabförmig ausgebildet sein. Das Gehäuse 2 weist beim dargestellten und insoweit bevorzugten Hubsteller 1 einen rechteckigen Querschnitt auf, könnte aber auch einen quadratischen oder anderweitig geformten Querschnitt aufweisen. Zudem ist das Gehäuse 2 zum Schutz gegen Verschmutzung im Wesentlichen geschlossen, auch wenn dies nicht zwingend ist.

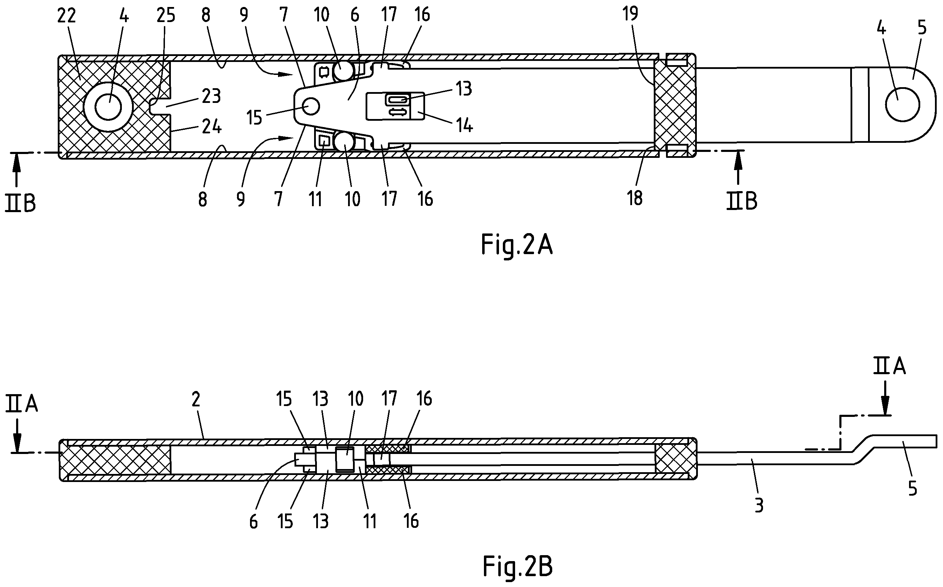

In den Fig. 2A und 2B ist der Hubsteller 1 in einer teilweise ausgezogenen Position in zwei senkrecht zueinander angelegten Schnittansichten dargestellt. Die Verstelllasche 3 weist erkennbar ein sich verjüngendes inneres Ende 6 auf. Dieses Ende 6 bildet entsprechend an den beiden Schmalseiten der Verstelllasche 3 zwei äußere Flächen 7, die schräg zu den gegenüberliegenden Innenseiten 8 des Gehäuses 2 verlaufen. Die Innenseiten 8 des Gehäuses 2 verlaufen beim dargestellten und insoweit bevorzugten Hubsteller 1 parallel zueinander und parallel zur Auszugsrichtung der Verstelllasche 3. Zwischen den schräg verlaufenden Flächen 7 der Verstelllasche 3 und den gegenüberliegenden Innenseiten 8 des Gehäuses 2 bilden sich entsprechend Klemmspalte 9 aus, in denen Klemmelemente 10 aufgenommen sind. Beim dargestellten und insoweit bevorzugten Hubsteller 1 sind die die Klemmspalte 9 bildenden Flächen 7 eben ausgeführt und weisen die Klemmelemente 10 eine zylindrische Form auf. Die Klemmelemente 10 können über den gekrümmten Umfang zwischen der Verstelllasche 3 und dem Gehäuse 2 geklemmt werden.

Wird die Verstelllasche 3 aus der in Fig. 2A dargestellten Position in das Gehäuse 2 hineingedrückt, wird die entsprechende Bewegung der Verstelllasche 3 unterbunden, da sich die Klemmelemente 10 auf beiden Seiten der Verstelllasche 3 in den dort vorgesehenen Klemmspalten 9 verkeilen. Die Klemmelemente 10 können dabei so hohe Klemmkräfte aufnehmen, dass die Verstelllasche 3 auch beim Aufbringen hoher Kräfte nicht in das Gehäuse 2 eingeschoben werden kann.

Die Klemmelemente 10 sind in einem Klemmschlitten 11 gehalten, der seinerseits an der Verstelllasche 3 gehalten ist. Der Klemmschlitten 11 des dargestellten und insoweit bevorzugten Hubstellers 1 ist zweiteilig ausgebildet und umgreift das untere Ende der Verstelllasche 3. Jedes der beiden Teile des Klemmschlittens 11 weist einen Finger 13 auf, der in ein Langloch 14 der Verstelllasche 3 eingreift. Der Klemmschlitten 11 ist auf diese Weise gegenüber der Verstelllasche 3 verschiebbar gelagert. Der Grad der Verschiebbarkeit des Klemmschlittens 11 gegenüber der Verstelllasche 3 ist jedoch in eine Richtung durch die Klemmung der Klemmelemente 10 in den Klemmspalten 9 und in die andere Richtung durch einen Formschluss mit der Verstelllasche 3, insbesondere den Zapfen der Verstelllasche, begrenzt.

Der Klemmschlitten 11 weist an zwei einandergegenüber liegenden Seiten Reiblaschen 16 auf, die an den mit den Klemmelementen 10 zusammenwirkenden Innenseiten 8 des Gehäuses 2 anliegen. Die dadurch bewirkte Haftreibung sorgt dafür, dass der Klemmschlitten 11 dazu neigt, seine Position beizubehalten. Liegt der Klemmschlitten 11 jedoch formschlüssig an der Verstelllasche 3 an, während diese in das Gehäuse 2 eingeschoben oder aus dem Gehäuse 2 ausgezogen wird, wird eine ausreichende Kraft zur Überwindung der Haftreibung auf den Klemmschlitten 11 ausgeübt und der Klemmschlitten 11 zusammen mit der Verstelllasche 3 im Gehäuse 2 verschoben. In Auszugrichtung bilden seitliche Nasen 17 der Verstelllasche 3 und das Gehäuse 2 korrespondierende Anschlagflächen, die zusammen einen Endanschlag 18 für die Verstelllasche 3 bilden und ein weiteres Ausziehen der Verstelllasche 3 aus dem Gehäuse 2 verhindern.

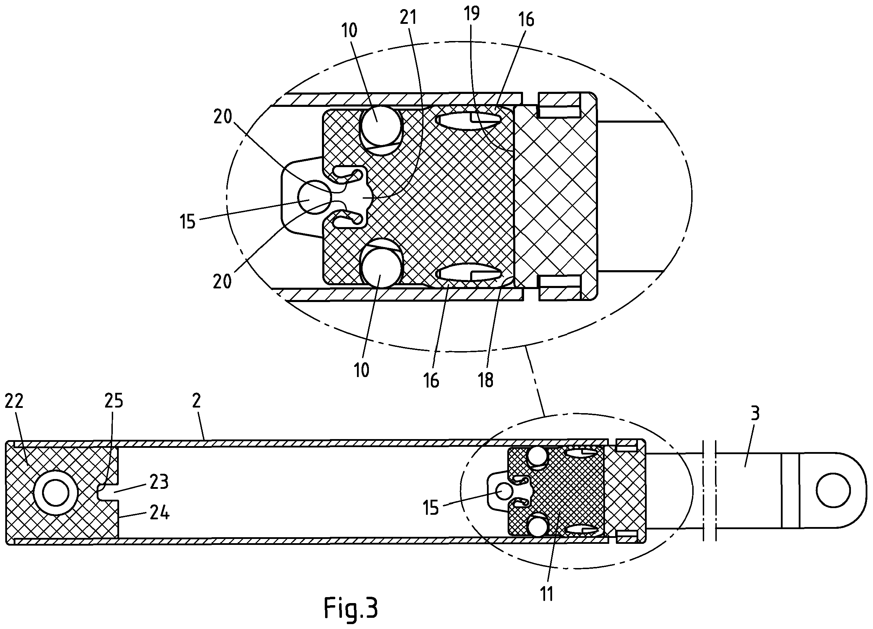

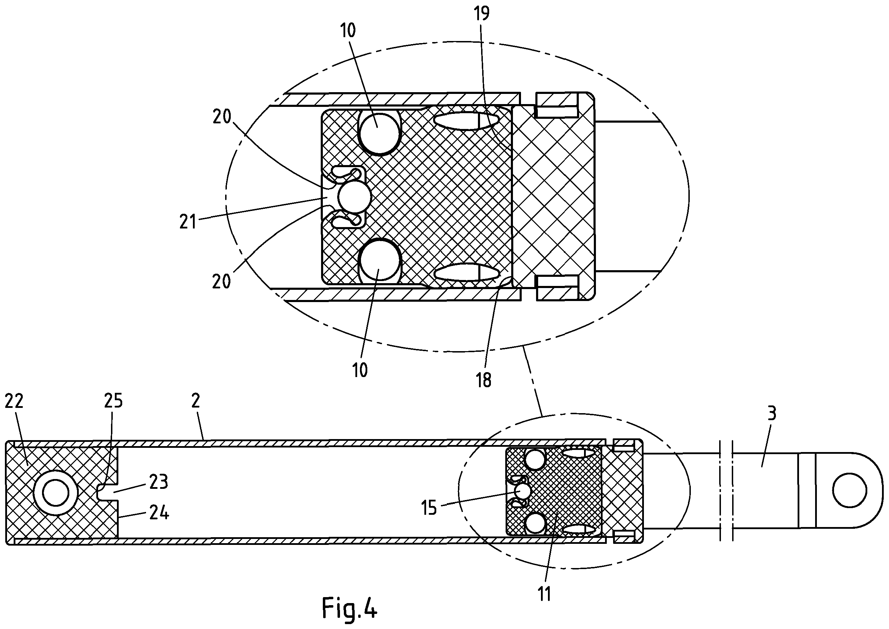

Wird die Verstelllasche 3 aus der in der Fig. 2A dargestellten Stellung weiter ausgezogen, gelangt der Hubsteller 1 in die in der Fig. 3 dargestellte Stellung, in der die Verstelllasche fast bis zu einer Endstellung derselben aus dem Gehäuse 2 ausgezogen ist. Der Klemmschlitten 11, der an den Zapfen 15 der Verstelllasche 3 anliegt, ist infolgedessen bis zu einem Endanschlag 19 für den Klemmschlitten 11 verschoben worden. Dieser Endanschlag 19 begrenzt die weitere Verschiebung des Klemmschlittens 11 in Auszugsrichtung der Verstelllasche 3. Wird die Verstelllasche sodann weiter bis zu ihrem Endanschlag 18 mit dem Gehäuse 2 aus diesem herausgezogen, rutschen die Zapfen 15 der Verstelllasche 3 vorbei an den laschenförmigen Verbindungselementen 20 des Klemmschlittens 11, wonach die Verbindungselemente 20 die Zapfen hintergreifen und so eine separate Verbindung zwischen der Verstelllasche 3 und dem Klemmschlitten 11 bilden. Die Zapfen 15 sind dabei in entsprechenden Aufnahmen 21 des Klemmenschlittens 11 aufgenommen. Dies ist insbesondere in der Fig. 4 dargestellt. Der Klemmschlitten 11 ist nun in einer Position mit der Verstelllasche 3 verbunden, in der die Klemmelemente 10 nicht klemmend in die Klemmspalten 9 gelangen können. Daher kann die Verstelllasche 3 ohne großen Kraftaufwand in das Gehäuse 2 eingeschoben werden.

Um die separate Verbindung zwischen dem Klemmschlitten 11 und der Verstelllasche 3 wieder zu lösen, muss die Verstelllasche 3 bis in eine Ausgangsstellung in das Gehäuse 2 eingeschoben werden. Diese ist bei dem dargestellten uns insoweit bevorzugten Hubsteller 1 erreicht, wenn die Zapfen 15 der Verstelllasche 3 in ein Bodenstück 22 des Gehäuses 2 eingreifen und dort an die Anschlagflächen der entsprechenden Aufnahme 23 anstoßen. Bevor die Verstelllasche 3 diese Ausgangsposition erreicht, gelangt der Klemmschlitten 11 jedoch mit dem Boden des Gehäuses 2 in Anlage, welches auf diese Weise einen Ausgangsanschlag 24 für den Klemmschlitten 11 bildet. Der Klemmschlitten 11 wird in dieser Position gehalten, während die Verstelllasche 3 weiter bis zu einem Ausgangsanschlag 25 für die Verstelllasche 3 eingeschoben werden kann. Dabei drücken sich die Zapfen 15 der Verstelllasche 3 an den Verbindungselementen 20 des Klemmschlittens 11 vorbei und die formschlüssige Rastverbindung zwischen der Verstelllasche 3 und dem Klemmschlitten 11 löst sich. Die Zapfen 15 der Verstelllasche sind sodann nicht mehr in den korrespondierenden Aufnahmen 21 des Klemmschlittens 11 aufgenommen. Die Verstelllasche 3 kann daher wieder teilweise ausgezogen werden und dabei den Klemmschlitten 11 mitführen, um in der entsprechenden Position wieder einem erneuten Einschieben der Verstelllasche 3 entgegenzuwirken. Um die Verstelllasche 3 wieder in die Ausgangsstellung in das Gehäuse 2 schieben zu können, muss die Verstelllasche 3 zunächst wieder wie beschrieben bis zur Endstellung ausgezogen werden, um auf diese Weise den Klemmschlitten 11 über die separate Rastverbindung an der Verstelllasche 3 festzulegen.

Das Einschieben der Verstelllasche 3 in das Gehäuse 2 könnte alternativ zu dem Ausgangsanschlag zwischen der Verstelllasche 3 und der Aufnahme 23 auch durch das Bodenstück 22 und die seitlichen Nasen 17 der Verstelllasche 3 oder durch ein Verklemmen der Klemmelemente 10 in den Klemmspalten 9 nach dem Lösen der separaten Verbindung zwischen der Verstelllasche 3 und dem Klemmschlitten 11 begrenzt sein.

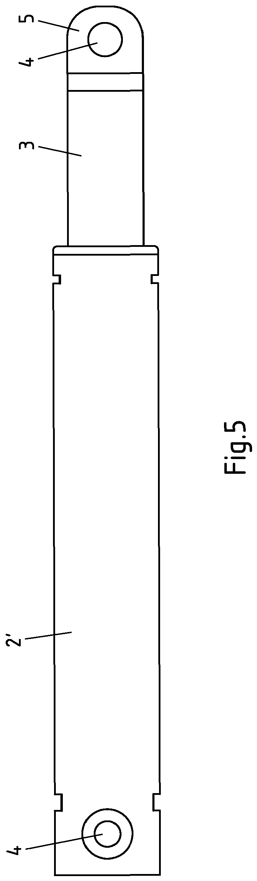

In der Fig. 5 ist ein alternativer Hubsteller 1' dargestellt. Dieser unterscheidet sich vom Hubsteller 1 der Fig. 1 bis 4 lediglich durch die Ausgestaltung des Bodens 26'.

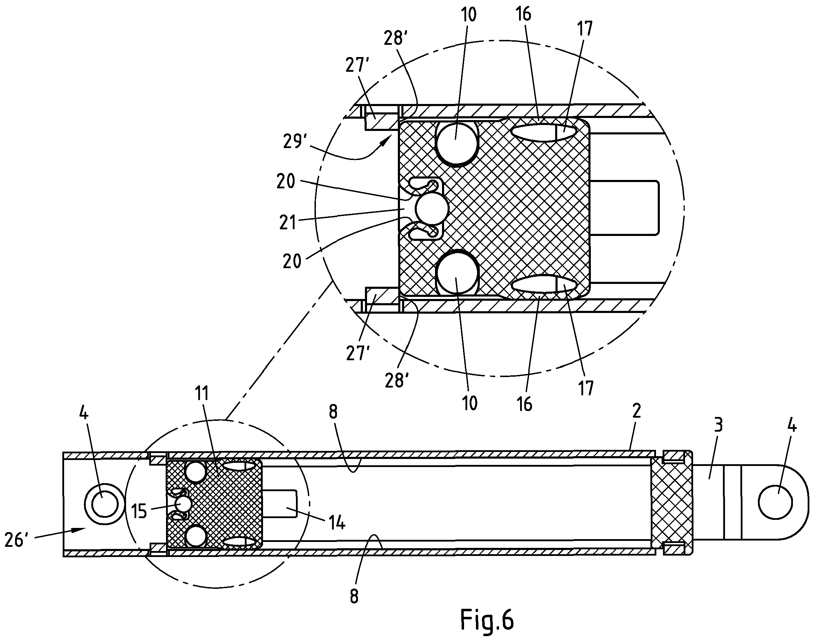

Der Boden 26' des Gehäuses 2' des in Fig. 5 dargestellten Hubstellers 1' ist in der Fig. 6 in einem Längsschnitt dargestellt. Im Bereich des Bodens 26' sind zwei Randelemente 27' des Gehäuses 2' nach innen eingedrückt, die in Auszugsrichtung weisende Anschlagflächen 28' bereitstellen. Die Anschlagflächen 28' bilden einen Ausgangsanschlag 29' für den Klemmschlitten 11'. Anstelle von nach innen eingedrückten Randelementen 27' des Gehäuses 2' könnten die Anschlagflächen 28' auch durch ein anderes Anschlagelement bereitgestellt werden.

Wenn die über die bereits beschriebene separate Verbindung mit dem Klemmschlitten 11 verbundene Verstelllasche 3 in Richtung ihrer Ausgangsstellung in das Gehäuse 2' eingeschoben wird, gelangt zunächst der Klemmschlitten 11 an den durch die Anschlagflächen 28' festgelegten Ausgangsanschlag 29'. Der Klemmschlitten 11 wird in dieser Position gehalten, während die Verstelllasche 3 weiter eingeschoben werden kann. Durch die entsprechende Relativbewegung zwischen der Verstelllasche 3 und dem bereits am Ausgangsanschlag 29' anliegenden Klemmschlitten 11, werden die Zapfen 15 der Verstelllasche 3 vorbei an den Verbindungselementen 20 des Klemmschlittens 11 aus der Aufnahme 21 desselben gedrückt und dabei die separate Verbindung zwischen dem Klemmschlitten 11 und der Verstelllasche 3 gelöst. Der Klemmschlitten 11 bleibt gleichwohl weiter verschiebbar gegenüber der Verstelllasche 3 an der Verstelllasche 3 gehalten, so dass einerseits die Verstelllasche 3 wieder ausgezogen werden kann und andererseits die Klemmelemente 10 dabei stets ein versehentliches Zurückschieben der Verstelllasche 3 in das Gehäuse unterbinden. Der Ausgangsanschlag der Verstelllasche 3 wird durch die Klemmelemente gebildet. Nachdem die separate Verbindung zwischen dem Klemmschlitten 11 und der Verstelllasche 3 gelöst ist, gelangen die Klemmelemente 10 mit zunehmendem weiteren Einschieben der Verstelllasche 3 in das Gehäuse 2' weiter in die Klemmspalten 9 zwischen dem Gehäuse 2' und der Verstelllache 3, bis die Klemmelemente 10 in den Klemmspalten 9 eingeklemmt werden und ein weiteres Einschieben der Verstelllasche 3 verhindern.

## Patentansprüche

1. Hubsteller (1,1') zur Verstellung eines Sitzmöbels und/oder Liegemöbels, mit einem Gehäuse (2,2') und einer Verstelllasche (3), wobei die Verstelllasche (3) teilweise aus dem Gehäuse (2,2') ausziehbar in dem Gehäuse gehalten ist, wobei wenigstens ein Klemmelement (10) gegenüber der Verstelllasche (3) zwischen einer Klemmstellung und wenigstens einer Verstellstellung verschiebbar vorgesehen ist und wobei das wenigstens eine Klemmelement (10) in der Klemmstellung in einem Klemmspalt (9) zwischen der Verstelllasche (3) und dem Gehäuse (2) derart klemmend aufgenommen ist, dass ein Einschieben der Verstelllasche (3) in das Gehäuse (2) verhindert ist, wobei eine separate lösbare Verbindung zwischen der Verstelllasche (3) und dem wenigstens einen Klemmelement (10) und/oder dem Klemmschlitten (11) derart vorgesehen ist, dass die Verstelllasche (3) im über die separate Verbindung mit dem wenigstens einen Klemmelement (10) und/oder dem Klemmschlitten (11) verbundenen Zustand von einer Endstellung in eine Ausgangsstellung in das Gehäuse (2,2') einschiebbar ist, **dadurch gekennzeichnet, dass** das Gehäuse (2,2') einen Endanschlag (19) für das Klemmelement (10) und/oder den Klemmschlitten (11) derart aufweist, dass die separate Verbindung zwischen der Verstelllasche (3) und dem wenigstens einen Klemmelement (10) und/oder dem Klemmschlitten (11) beim Ausziehen der Verstelllasche (3) in die Endstellung zwangsweise geschlossen wird.

2. Hubsteller nach Anspruch 1,
**dadurch gekennzeichnet, dass** sich der Klemmspalt (9) in Auszugsrichtung der Verstelllasche (3) verjüngt.

3. Hubsteller nach Anspruch 1 oder 2,
**dadurch gekennzeichnet, dass** die Verstelllasche (3) ein sich verjüngendes im Gehäuse (2,2') aufgenommenes Ende (6) aufweist und dass das wenigstens eine Klemmelement (10) in der Klemmstellung zwischen dem sich verjüngenden Ende der Verstelllasche (3) und dem Gehäuse (2,2') geklemmt ist.

4. Hubsteller nach einem der Ansprüche 1 bis 3,
**dadurch gekennzeichnet, dass** ein das wenigstens eine Klemmelement (10) aufweisender Klemmschlitten (11) vorgesehen ist und dass der Klemmschlitten (11) verschiebbar gegenüber der Verstelllasche (3), vorzugsweise an der Verstelllasche (3), gehalten sowie im Gehäuse (2,2') aufgenommen ist.

5. Hubsteller nach einem der Ansprüche 1 bis 4,
**dadurch gekennzeichnet, dass** die Verstelllasche (3) ein Langloch (14) aufweist und dass das wenigstens eine Klemmelement (10) und/oder der Klemmschlitten (11) formschlüssig und verschiebbar in das Langloch (14) eingreift.

6. Hubsteller nach einem der Ansprüche 1 bis 5,
**dadurch gekennzeichnet, dass** zwischen dem wenigstens einen Klemmelement (10) und/oder dem Klemmschlitten (11) ein beim Ausziehen der Verstelllasche (3) wirksamer Formschluss vorgesehen ist, so dass das Klemmelement (10) und/oder der Klemmschlitten (11) beim Ausziehen der Verstelllasche (3) an der Verstelllasche (3) anliegt und mit der Verstelllasche (3) entlang des Gehäuses (2,2') bewegt wird.

7. Hubsteller nach einem der Ansprüche 1 bis 6,
**dadurch gekennzeichnet, dass** die separate Verbindung eine Klemmverbindung und/oder Rastverbindung ist.

8. Hubsteller nach einem der Ansprüche 1 bis 7,
**dadurch gekennzeichnet, dass** das Gehäuse (2,2') einen Ausgangsanschlag (24,29') für das Klemmelement (10) und/oder den Klemmschlitten (11) derart bereitstellt, dass die separate Verbindung zwischen der Verstelllasche (3) und dem Klemmelement (10) und/oder dem Klemmschlitten (11) beim Einschieben der Verstelllasche (3) in die Ausgangsstellung zwangsweise gelöst wird.

9. Hubsteller nach einem der Ansprüche 1 bis 8,
**dadurch gekennzeichnet, dass** die Verstelllasche (3) wenigstens einen Zapfen (15) aufweist, dass das wenigstens eine Klemmelement (10) und/oder der Klemmschlitten (11) wenigstens ein Verbindungselement (20) aufweist und dass das Verbindungselement (20) bei geschlossener separater Verbindung den Zapfen (15) klemmt und/oder hintergreift.

10. Hubsteller nach einem der Ansprüche 1 bis 9,
**dadurch gekennzeichnet, dass** das Gehäuse (2,2') und die Verstelllasche (3) korrespondierende Anschlagflächen aufweisen und dass die korrespondierenden Anschlagflächen an einer Endstellung der Verstelllasche (3) zur Übertragung einer Auszugskraft auf das Gehäuse (2,2') in Anlage sind.

11. Hubsteller nach einem der Ansprüche 1 bis 10,
**dadurch gekennzeichnet, dass** das wenigstens eine Klemmelement (10) und/oder der Klemmschlitten (11) wenigstens abschnittsweise reibschlüssig am Gehäuse (2,2') anliegt.

12. Hubsteller nach einem der Ansprüche 1 bis 11,
**dadurch gekennzeichnet, dass** die Verstelllasche (3) stufenlos entlang des Gehäuses (2,2') verstellbar ist.

13. Sitzmöbel und/oder Liegemöbel mit zwei gegeneinander verstellbaren Bauteilen, vorzugsweise umfassend eine Rückenlehne, ein Kopfteil, ein Fußteil und/oder eine Armlehne,
**dadurch gekennzeichnet, dass** die beiden Bauteile über einen Hubsteller (1,1') nach einem der Ansprüche 1 bis 12 miteinander verbunden sind.

## Claims

1. Lift adjuster (1,1') for adjusting a piece of seating and/or reclining furniture, comprising a housing (2,2') and an adjustment plate (3), the adjustment plate (3) being held in the housing in such a way that it can be pulled out of the housing (2,2') in part, at least one clamping element (10) being provided so as to be movable with respect to the adjustment plate (3) between a clamping position and at least one adjustment position, and the at least one clamping element (10), in the clamping position, being received in a clamped manner in a clamping gap (9) between the adjustment plate (3) and the housing (2) in such a way that the adjustment plate (3) is prevented from being slid into the housing (2), whereby a separate, detachable connection provided between the adjustment plate (3) and the at least one clamping element (10) and/or the clamping slide (11) in such a way that the adjustment plate (3) can be slid into the housing (2,2') from an end position into a starting position when connected by the separate connection to the at least one clamping element (10) and/or the clamping slide (11), **characterised in that** the housing (2,2') comprises an end stop (19) for the clamping element (10) and/or the clamping slide (11) in such a way that the separate connection between the adjustment plate (3) and the at least one clamping element (10) and/or the clamping slide (11) must be closed when pulling out the adjustment plate (3) into the end position.

2. Lift adjuster according to Claim 1, **characterised in that** the clamping gap (9) tapers in the pull-out direction of the adjustment plate (3).

3. Lift adjuster according to either Claim 1 or 2, **characterised in that** the adjustment plate (3) comprises a tapered end (6) which is received in the housing (2,2'), and **in that** the at least one clamping element (10), in the clamping position, is clamped between the tapered end of the adjustment plate (3) and the housing (2,2').

4. Lift adjuster according to any one of Claims 1 to 3, **characterised in that** a clamping slide (11) comprising the at least one clamping element (10) is provided, and **in that** the clamping slide (11) is held so as to be movable with respect to the adjustment plate (3), preferably on the adjustment plate (3), and received in the housing (2,2').

5. Lift adjuster according to any one of Claims 1 to 4, **characterised in that** the adjustment plate (3) has a slot (14), and **in that** the at least one clamping element (10) and/or the clamping slide (11) engage in the slot (14) in an interlocking and movable manner.

6. Lift adjuster according to any one of Claims 1 to 5, **characterised in that**, between the at least one clamping element (10) and/or the clamping slide (11), a positive fit which takes effect when pulling out the adjustment plate (3) is provided so that the clamping element (10) and/or the clamping slide (11) is in contact with the adjustment plate (3) when the adjustment plate (3) is pulled out and is moved along the housing (2,2') together with the adjustment plate (3).

7. Lift adjuster according to any one of Claims 1 to 6, **characterised in that** the separate connection is a clamped connection and/or a snap connection.

8. Lift adjuster according to any one of Claims 1 to 7, **characterised in that** the housing (2,2') provides a starting stop (24,29') for the clamping element (10) and/or the clamping slide (11) in such a way that the separate connection between the adjustment plate (3) and the clamping element (10) and/or the clamping slide (11) must be released when the adjustment plate (3) is slid into the starting position.

9. Lift adjuster according to any one of Claims 1 to 8, **characterised in that** the adjustment plate (3) comprises at least one pin (15), **in that** the at least one clamping element (10) and/or the clamping slide (11) has at least one connecting element (20), and **in that** the connecting element (20) clamps and/or engages behind the pin (15) when the separate connection is closed.

10. Lift adjuster according to any one of Claims 1 to 9, **characterised in that** the housing (2,2') and the adjustment plate (3) comprise corresponding stop faces, and **in that** the corresponding stop faces are in contact with an end position of the adjustment plate (3) to transmit a pull-out force to the housing (2,2').

11. Lift adjuster according to any one of Claims 1 to 10, **characterised in that** the at least one clamping element (10) and/or the clamping slide (11) is in frictional contact with the housing (2,2') at least in some portions.

12. Lift adjuster according to any one of Claims 1 to 11, **characterised in that** the adjustment plate (3) can be adjusted steplessly along the housing (2,2').

13. Piece of seating and/or reclining furniture comprising two components which can be adjusted relative to one another, preferably having a backrest, a head part, a foot part and/or an armrest, **characterised in that** the two components are interconnected by a lift adjuster (1,1') according to any one of Claims 1 to 12.

## Revendications

1. Vérin de levage (1, 1') servant à régler un meuble pour s'asseoir et/ou s'étendre, comprenant un boîtier (2, 2') et une patte de réglage (3), la patte de réglage (3) étant maintenue dans le boîtier (2, 2') de façon à pouvoir être partiellement sortie du boîtier, où l'on prévoit au moins un élément de serrage (10) qui peut coulisser par rapport à la patte de réglage (3) entre une position de serrage et au moins une position de réglage et où le au moins un élément de serrage (10) est, dans la position de serrage, logé avec serrage dans une fente de serrage (9) ménagée entre la patte de réglage (3) et le boîtier (2) de telle façon à empêcher la patte de réglage (3) de pénétrer dans le boîtier (2), où l'on prévoit une connexion amovible séparée entre la patte de réglage (3) et le au moins un élément de serrage (10) et/ou la glissière de serrage (11) de telle façon que la patte de réglage (3) peut être insérée, dans la position raccordée, par la connexion séparée avec le au moins un élément de serrage (10) et/ou la glissière de serrage (11), d'une position finale en une position initiale dans le boîtier (2, 2'), **caractérisé en ce que** le boîtier (2, 2') présente une butée terminale (19) pour l'élément de serrage (10) et/ou la glissière de serrage (11) de telle façon que la connexion séparée entre la patte de réglage (3) et le au moins un élément de serrage (10) et/ou la glissière de serrage (11) est refermée de force dans la position finale lorsque l'on retire la patte de réglage (3).

2. Vérin de levage selon la revendication 1, **caractérisé en ce que** la fente de serrage (9) se rétrécit dans la direction d'extraction de la patte de réglage (3).

3. Vérin de levage selon la revendication 1 ou 2, **caractérisé en ce que** la patte de réglage (3) présente une extrémité (6) effilée logée dans le boîtier (2, 2') et **en ce que** le au moins un élément de serrage (10) est serré dans la position de serrage entre l'extrémité effilée de la patte de réglage (3) et le boîtier (2, 2').

4. Vérin de levage selon l'une quelconque des revendications 1 à 3, **caractérisé en ce que** l'on prévoit une glissière de serrage (11) présentant au moins un élément de serrage (10) et **en ce que** la glissière de serrage (11) est maintenue coulissante par rapport à la patte de réglage (3), de préférence sur la patte de réglage (3), et est également logée dans le boîtier (2, 2').

5. Vérin de levage selon l'une quelconque des revendications 1 à 4, **caractérisé en ce que** la patte de réglage (3) présente un trou oblong (14) et **en ce que** le au moins un élément de serrage (10) et/ou la glissière de serrage (11) vient en prise par complémentarité de forme et coulissant dans le trou oblong (14).

6. Vérin de levage selon l'une quelconque des revendications 1 à 5, **caractérisé en ce que** l'on prévoit entre le au moins un élément de serrage (10) et/ou la glissière de serrage (11) une complémentarité de forme efficace lors de l'extraction de la patte de réglage (3) de telle façon que l'élément de serrage (10) et/ou la glissière de serrage (11) est en appui sur la patte de réglage (3) lors de l'extraction de la patte de réglage (3) et est déplacé avec la patte de réglage (3) le long du boîtier (2, 2').

7. Vérin de levage selon l'une quelconque des revendications 1 à 6, **caractérisé en ce que** la connexion séparée est une connexion de serrage et/ou une connexion d'encliquetage.

8. Vérin de levage selon l'une quelconque des revendications 1 à 7, **caractérisé en ce que** le boîtier (2, 2') fournit une butée de sortie (24, 29') pour l'élément de serrage (10) et/ou la glissière de serrage (11) de telle façon que la connexion séparée entre la patte de réglage (3) et l'élément de serrage (10) et/ou la glissière de serrage (11) est desserrée de force lors de l'insertion de la patte de réglage (3) dans la position initiale.

9. Vérin de levage selon l'une quelconque des revendications 1 à 8, **caractérisé en ce que** la patte de réglage (3) présente au moins un tenon (15), **en ce que** le au moins un élément de serrage (10) et/ou la glissière de serrage (11) présente au moins un élément de connexion (20) et **en ce que** l'élément de connexion (20) serre le tenon (15) et/ou vient en prise avec celui-ci par l'arrière lors d'une connexion séparée fermée.

10. Vérin de levage selon l'une quelconque des revendications 1 à 9, **caractérisé en ce que** le boîtier (2, 2') et la patte de réglage (3) présentent des surfaces de butée correspondantes et **en ce que** les surfaces de butée correspondantes sont en appui sur une position finale de la patte de réglage (3) pour la transmission d'une force de retenue sur le boîtier (2, 2').

11. Vérin de levage selon l'une quelconque des revendications 1 à 10, **caractérisé en ce que** le au moins un élément de serrage (10) et/ou la glissière de serrage (11) est en appui par friction contre le boîtier (2, 2'), au moins par sections.

12. Vérin de levage selon l'une quelconque des revendications 1 à 11, **caractérisé en ce que** la patte de réglage (3) est réglable en continu le long du boîtier (2, 2').

13. Meuble pour s'asseoir et/ou s'étendre ; constitué de deux composants réglables l'un par rapport à l'autre, de préférence comportant un dossier, une partie de tête, une partie de pied et/ou un accoudoir, **caractérisé en ce que** les deux composants sont mutuellement reliés à l'aide d'un vérin de levage (1, 1') selon l'une quelconque des revendications 1 à 12.
